(19) Europäisches Patentamt
European Patent Office
Office européen des brevets

(11) **EP 2 741 061 A1**

(12) **EUROPÄISCHE PATENTANMELDUNG**

(43) Veröffentlichungstag:
**11.06.2014 Patentblatt 2014/24**

(51) Int Cl.:
***G01K 7/42*** *(2006.01)*

(21) Anmeldenummer: **13194477.9**

(22) Anmeldetag: **26.11.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **04.12.2012 DE 102012222151**

(71) Anmelder: **BSH Bosch und Siemens Hausgeräte GmbH**
**81739 München (DE)**

(72) Erfinder:
• **Bauer, Hans-Jürgen**
**83278 Traunstein (DE)**
• **Haarhaus, Carsten**
**30659 Hannover (DE)**
• **Roth, Eduard**
**83301 Traunreut (DE)**

(54) **Verfahren und Vorrichtung zum Bestimmen einer effektiven Kerntemperatur eines Garguts**

(57) Die Erfindung betrifft ein Verfahren zum Bestimmen einer effektiven Kerntemperatur (Te) eines Garguts (G) anhand von Messwerten (T1, T2, T3) von mindestens drei Temperatursensoren (16, 17, 18) eines Kerntemperaturfühlers (11), wobei die effektive Kerntemperatur (Te) mittels einer Interpolation der Messwerte (T1, T2, T3) und Minimalwertbildung bestimmt wird. Die Erfindung betrifft auch eine Vorrichtung zum Durchführen des Verfahrens.

Fig.1

EP 2 741 061 A1

**Beschreibung**

Die Erfindung betrifft ein Verfahren zum Bestimmen einer effektiven Kerntemperatur eines Garguts anhand von Messwerten von mindestens drei Temperatursensoren eines Kerntemperaturfühlers. Die Erfindung betrifft ferner eine Vorrichtung zum Durchführen des Verfahrens.

Kerntemperaturfühler oder Garprozessfühler werden eingesetzt, um eine Kerntemperatur eines Garguts bzw. Lebensmittels, insbesondere Fleischstücks, beim Garen in einem Backofen zu ermitteln. Aus lebensmittelhygienischer Sicht sollte beim Garen von Fleisch darauf geachtet werden, dass das gesamte Fleischstück bestimmte MindestTemperaturen erreicht, damit ggf. vorhandene Mikroorganismen, zum Beispiel Salmonellen, beim Garen sicher abgetötet werden. Dazu ist es bekannt, ein Garzeitende dadurch vorzugeben, dass ein Nutzer eine Soll-Kerntemperatur vorgibt, welche einem gewünschten Garzustand entspricht, z.B. bei Rindfleisch ca. 50°C für 'englisch', ca. 60°C für 'medium' und ca. 70°C für 'durchgegart'. Wird die Soll-Kerntemperatur erreicht, wird der Garvorgang durch einen mit dem Kerntemperaturfühler verbundenen Backofen automatisch beendet, und dies wird dem Nutzer signalisiert.

Es sind Mehrpunkt-Kerntemperaturfühler bekannt, deren Fühlerrohr mehrere Temperatursensoren bzw. Messpunkte aufweist. Mit diesen sollen Fehlsteckungen kompensiert werden, bei denen der Temperatursensor nicht genau im Kern des Garguts sitzt. Bei Mehrpunkt-Kerntemperaturfühlern wird eine effektive Kerntemperatur beispielsweise dadurch festgelegt, dass ein Minimum der Messwerte der Temperatursensoren als effektive Kerntemperatur verwendet wird. Sobald beim Garvorgang die auf diese Weise ermittelte Kerntemperatur erreicht ist, beendet der Backofen den Garvorgang.

Nachteilig ist, dass eine tatsächliche Kerntemperatur häufig nicht der mit einem der Temperatursensoren gemessenen Kerntemperatur entspricht, da ein Temperatursensor meist nicht genau im Kern des Garguts angeordnet ist.

DE 100 61 821 A1 beschreibt ein Verfahren zum Führen eines Garprozesses mit einem Garprozessfühler und zur Erkennung einer Fehlsteckung eines Mehrpunkt-Kerntemperaturfühlers im Gargut. Über die Thermokinetik der erfassten Temperaturwerte, also über eine zeitliche Betrachtung, sind spezifische Gargut- und/oder Gargerätgrößen bestimmbar und zur Garprozesssteuerung verwendbar. Über die im Gargut erfassten Temperaturwerte lässt sich dabei bei Fehlsteckung die Kerntemperatur des Gargutes beim Garen bestimmen, indem eine Extrapolation der entsprechenden zeitlichen Verläufe durchgeführt wird.

Aus DE 299 23 215 U1 ist ein Kerntemperaturfühler zum Steuern eines Garprozesses bekannt, der zumindest teilweise in ein Gargut einsteckbar ist und mit dem mindestens zwei Temperaturwerte erfassbar sind. Beruhend auf der Thermokinetik der erfassten Temperaturwerte, also über eine zeitliche Betrachtung, sind spezifische Gargut- und/oder Gargerätgrößen bestimmbar und zur Garprozesssteuerung verwendbar. Dabei können thermokinematisch Temperaturdifferenzwerte zwischen längs der Einsteckrichtung des Garprozessfühlers räumlich getrennt angeordneten Sensoren erfassbar und zur Garprozesssteuerung heranziehbar sein. Die zeitliche Extrapolation der erfassten Temperaturdifferenzwerte kann insbesondere zum Erreichen eines gesetzten Garergebnisses verwendet werden.

Bei diesen beiden Druckschriften ist es nachteilig, dass für die Auswertung eine zeitliche Extrapolation der Messwerte vorgenommen wird, wobei anfänglich Messwerte für die Extrapolation über eine ausreichend lange Zeitdauer erfasst werden müssen. Durch deren teils lang andauernde Aufnahme und ist eine Reaktionszeit für eine Garprozesssteuerung nicht ausreichend schnell.

Es ist die **Aufgabe** der vorliegenden Erfindung, die Nachteile des Standes der Technik zumindest teilweise zu überwinden und insbesondere eine verbesserte Möglichkeit zur Bestimmung einer effektiven Kerntemperatur bereitzustellen, insbesondere zum schnellen Steuern eines Garablaufs.

Diese Aufgabe wird gemäß den Merkmalen der unabhängigen Ansprüche gelöst. Bevorzugte Ausführungsformen sind insbesondere den abhängigen Ansprüchen entnehmbar. Die Aufgabe wird gelöst durch ein Verfahren zum Bestimmen einer effektiven Kerntemperatur eines Garguts anhand von Messwerten von mindestens drei Temperatursensoren eines Kerntemperaturfühlers, wobei die effektive Kerntemperatur mittels einer Interpolation der Messwerte und Minimalwertbildung bestimmt wird.

Ein Vorteil besteht darin, dass die effektive Kerntemperatur innerhalb einer sehr kurzen Zeit genauer bestimmbar ist. Dieses Verfahren benutzt im Gegensatz zu einer zeitlichen Extrapolation eine räumliche Interpolation, bei der signifikante Messwerte nicht erst über eine längere Zeitdauer hinweg aufgenommen werden müssen. Dies bedeutet insbesondere, dass die effektive Kerntemperatur als interpolierter Minimalwert der als Messwerte erfassten Temperaturwerte räumlich auch zwischen Sensorpositionen der Temperatursensoren bestimmt wird. Dies schließt den Fall ein, dass ein Messwert eines der Temperatursensoren bereits einem Minimalwert der effektiven Kerntemperatur entspricht. Es wird ein sicheres Erreichen der vom Benutzer gewünschten Soll-Kerntemperatur ermöglicht, als auch eine einfache Kompensation von Fehlsteckungen und eine Erhöhung der Gelingsicherheit.

Es ist eine Ausgestaltung, dass die Messwerte innerhalb eines Messzyklus abgefühlt werden. Dies ermöglicht eine besonders genaue, von zeitlichen Effekten im Wesentlichen unabhängige Bestimmung der effektiven Kerntemperatur. Insbesondere werden so Messwerte praktisch zeitgleich abgefühlt. Praktisch zeitgleich bedeutet insbesondere, dass der Messzyklus so kurz ist, dass sich ein Zustand des Garguts während des Messzyklus nicht oder nicht wesentlich verändert. Beispielsweise kann ein Messzyklus eine Sekunde oder weniger andauern, aber auch länger. Unter einem Messzyklus kann insbesondere eine Messabfolge für die Temperatursensoren verstanden, bei welcher die Messwerte der berücksichtigten Temperatursensoren nacheinander erfasst werden, bevor von einem der Temperatursensoren ein weiterer Messwert erfasst wird.

Auch ist es eine Ausgestaltung, dass die effektive Kerntemperatur mittels einer Polynominterpolation bestimmt wird. Dies ermöglicht die Verwendung einfacher und bereits verfügbarer Polynom-Funktionen und Algorithmen, was die Minimalwertbestimmung erheblich erleichtert. Vereinfacht wird dadurch auch eine Programmierung und/oder Hardware-Ausgestaltung einer Steuereinrichtung oder sonstigen Schaltung, welche die Minimalwertbestimmung durchführt.

Zur Bestimmung des Interpolationspolynoms kann beispielsweise die Lagrange'sche Interpolationsformel, der Newton'sche Algorithmus oder der Algorithmus von Neville-Aitken verwendet werden. Diese Verfahren ermöglichen eine Bildung eines Interpolations-Polynoms. Mit anderen Worten kann das Interpolationspolynom ein auf Grundlage der Lagrange'sche Interpolationsformel bestimmtes Polynom sein. Jedoch sind auch andere Interpolationsverfahren durchführbar.

Es ist noch eine Ausgestaltung, dass die effektive Kerntemperatur als Lösung einer analytischen, insbesondere quadratischen Gleichung bestimmt wird, wobei die Messwerte Eingangswerte der analytischen Gleichung darstellen. Dadurch wird eine besonders schnelle und genaue Bestimmung der effektiven Kerntemperatur ermöglicht.

Es ist noch eine weitere Ausgestaltung, dass die effektive Kerntemperatur anhand von Messwerten genau dreier der Temperatursensoren bestimmt wird. Insbesondere die Verwendung von genau drei Temperatursensoren ermöglicht eine einfache Auflösung als analytische Gleichung.

Dies ist beispielsweise der Fall, wenn der Kerntemperaturfühler nur Temperatursensoren aufweist. Alternativ kann diese Ausgestaltung auch bei einem Kerntemperaturfühler mit mehr als drei Temperatursensoren eingesetzt werden. In diesem Fall können von diesen mehr als drei Temperatursensoren beispielsweise drei der Temperatursensoren zur Lösung der analytischen Gleichung ausgewählt werden. Diese drei Temperatursensoren können z.B. die drei Temperatursensoren mit den drei geringsten Temperaturwerten sein oder mögen einer Gruppe von drei zueinander benachbarten Temperatursensoren entstammen, von denen einer die geringste gemessene Temperatur aufweist.

Gemäß einer Weiterbildung umfasst die Polynominterpolation eine Minimalwertbestimmung einer zugehörigen Parabel.

Es ist ferner eine Ausgestaltung, dass die Interpolation auf Grundlage einer iterativen Bestimmung mittels eines Iterationsgleichungssystems durchgeführt wird, wobei die Messwerte als Startwerte für das Iterationsgleichungssystem verwendet werden. Dieses Verfahren erlaubt insbesondere auch eine Bestimmung eines Minimalwerts für Messwerte von mehr als drei Temperatursensoren. Dadurch wird eine noch genauere Bestimmung der Kerntemperatur ermöglicht.

Insbesondere kann zur Minimalwertbildung ein Lösungsschema eingesetzt werden, bei dem eine Minimalwertbestimmung beispielsweise anhand des Horner-Schemas oder des Newton-Verfahrens durchgeführt wird, welche beispielhaft zur numerischen Ermittlung von Nullstellen geeignet sind, um einen Extremwert eines Polynoms zu ermitteln.

Gemäß einer Weiterbildung sind die Temperatursensoren entlang einer Längserstreckung eines Fühlerrohrs des Kerntemperaturfühlers zueinander gleich beabstandet angeordnet, was erforderliche Berechnungsschritte weiter vereinfacht.

Die Aufgabe wird auch gelöst durch eine Vorrichtung zum Bestimmen einer effektiven Kerntemperatur eines Garguts anhand von Messwerten von mindestens drei Temperatursensoren eines Kerntemperaturfühlers, wobei die Temperatursensoren in einer Einsteckrichtung beabstandet angeordneten sind und wobei die Vorrichtung dazu eingerichtet ist, die Kerntemperatur anhand eines solchen Verfahrens zu bestimmen. Die Vorrichtung kann analog zu dem Verfahren ausgestaltet sein und deren Vorteile aufweisen.

Eine Ausgestaltung ist, dass die Vorrichtung ein mit dem Kerntemperaturfühler kommunikativ koppelbares Gargerät ist. Ermöglicht wird dadurch der Einsatz üblicher MehrpunktKerntemperaturfühler mit mindestens drei Temperatursensoren, deren Messwerte durch eine Steuereinrichtung des Gargeräts verarbeitet bzw. ausgewertet werden, um die effektive Kerntemperatur zu bestimmen. Diese kann dann von der Steuereinrichtung zur Steuerung eines momentan laufenden Garprogramms verwendet werden.

Die Bestimmung der effektiven Kerntemperatur erfolgt insbesondere durch eine Elektronik, insbesondere zentrale Steuereinrichtung, im Gargerät.

Das Gargerät weist insbesondere einen Backofen auf, z.B. einen Einbau-Backofen oder einen Herd. Das Gargerät kann aber auch eine Kombination mit anderen Gargeräten sein, wie ein Backofen/Mikrowellen-Kombinationsgerät mit oder ohne Dampfgarfunktion usw. Das Gargerät ist insbesondere ein Haushaltsgargerät.

Es ist eine zusätzliche Ausgestaltung, dass die Vorrichtung der Kerntemperaturfühler ist, welcher eine Elektronik zur Bestimmung der effektiven Kerntemperatur z.B. im Griff aufweist. Auch kann es ein kommunikativ mit einem Gargerät gekoppelter Kerntemperaturfühler sein, wobei Teile der Auswertung und Verarbeitung der Messwerte im Kerntemperaturfühler ablaufen und andere Teile in der Steuereinrichtung des Gargeräts ablaufen.

Gemäß einer Weiterbildung können Interpolationsverfahren und Extremwertermittlung vorbestimmt bzw. bereits in der Vorrichtung fest implementiert sein.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugzeichen versehen sein.

Fig.1   zeigt einen Mehrpunkt-Kerntemperaturfühler mit Temperatursensoren in einem Gargerät und Messwerte der Temperatursensoren mit einer durch diese gelegten Kurve eines Interpolationspolynoms;

Fig.2   zeigt den Mehrpunkt-Kerntemperaturfühler mit gegenüber Fig.1 anderen Temperaturwerten;

Fig.3   zeigt den Mehrpunkt-Kerntemperaturfühler mit gegenüber Fig.1 noch anderen Temperaturwerten; und

Fig.4   zeigt den Mehrpunkt-Kerntemperaturfühler mit gegenüber Fig.1 noch anderen Temperaturwerten.

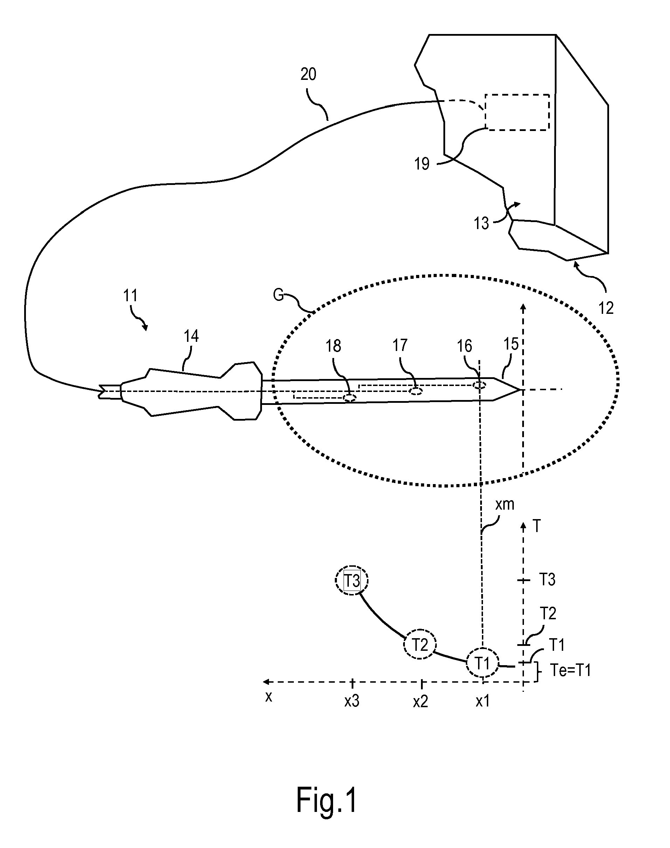

**Fig.1** zeigt einen Mehrpunkt-Kerntemperaturfühler 11. Der Kerntemperaturfühler 11 ist zum Messen einer Kerntemperatur von Gargut G (z.B. einem Stück Fleisch oder einer Kartoffel) ausgebildet, welches sich in einem Garraum 13 eines Gargeräts 12 zur Wärmebehandlung befindet. Bei dem Gargerät 12 handelt es sich beispielsweise um einen Backofen und bei dem Garraum 13 um einen Ofenraum.

Der Kerntemperaturfühler 11 weist einen Griff 14 auf. Aus dem Griff 14 ragt ein Fühlerrohr 15, welches u.a. auch als Spieß bezeichnet wird. Das Fühlerrohr 15 ist im Wesentlichen als hohles Rohr ausgebildet und ist an seinem freien Ende zum Einstechen in das Gargut G geschlossen und spitz zulaufend ausgebildet. In dem Fühlerrohr 15 sind beispielhaft drei Temperatursensoren 16, 17, 18 längs dessen Längsrichtung zwischen der Spitze und dem Griff 14 angeordnet. Mittels der Temperatursensoren 16, 17, 18 werden an deren Sensorpositionen x1, x2 bzw. x3 bezüglich der Längsrichtung dort herrschende Temperaturen als Messwerte T1, T2 bzw. T3 abgefühlt oder gemessen. Ein erster Temperatursensor 16 ist hier beispielhaft nahe der Spitze an der ersten Sensorposition x1 angeordnet, ein zweiter Temperatursensor 17 weiter in Richtung des Griffs 14 und ein dritter Temperatursensor 18 gleichbeabstandet am nächsten zu dem Griff 14. Gestrichelt eingezeichnete elektrische Leitungen führen von den Temperatursensoren 16, 17, 18 in den Griff 14 und über ein Anschlusskabel 20 weiter zu einer Steuereinrichtung 19 des Gargeräts 12. Die Steuereinrichtung 19 ist u.a. dazu eingerichtet, die Funktionen des Gargeräts 12 zu steuern.

Die Steuereinrichtung 19 ist ferner dazu eingerichtet, fortlaufend die Messwerte T1, T2 bzw. T3 innerhalb eines gemeinsamen Messzyklus zu bestimmen. Innerhalb des Messzyklus, z.B. innerhalb von einer Sekunde, erfasste Messwerte T1, T2 bzw. T3 werden durch die Steuereinrichtung 19 verarbeitet. Folgend wird aus den Messwerten T1, T2 bzw. T3 eine effektive Kerntemperatur Te als Temperatur-Minimalwert an einer Position xm bestimmt, die auch zwischen den Sensorpositionen x1, x2 und x3 liegen kann. Die Verarbeitung umfasst insbesondere eine Nutzung einer Polynominterpolation.

Unterhalb des Kerntemperaturfühlers 11 ist ein Diagramm dargestellt, bei dem x einen Abstand eines Messpunktes bzw. einer Sensorposition von der Spitze des Fühlerrohrs 15 darstellt und T eine dort herrschende Temperatur des umgebenden Garguts G darstellt. Der in diesem Diagramm beispielhaft dargestellte Temperaturverlauf hat eine höchste gemessene Temperatur als dritten Messwert T3 bei dem dritten Temperatursensor 18 an dessen von der Spitze am weitesten entfernten Sensorposition x3. Eine demgegenüber niedrigere Temperatur wird als zweiter Messwert T2 bei dem zweiten Temperatursensor 17 gemessen, welcher an der zweiten Sensorposition x2 in Richtung der Spitze benachbart zum dritten Temperatursensor 18 angeordnet ist. Der erste Messwert T1 erfasst die niedrigste Temperatur T1 an der ersten Sensorposition x1, welche der Spitze benachbart ist. Dies entspricht einer Steckung des Kerntemperaturfühlers 11 so, dass die Spitze des Fühlerrohrs 15 sich am nächsten am Kern des Garguts G befindet.

Mittels der Sensorpositionen x1, x2, x3 und der diesen zugeordneten Messwerte T1, T2, T3 bestimmt die Steuereinrichtung 19 analytisch eine effektive Kerntemperatur Te = Te (x1, x2, x3, T1, T2, T3). Die Bestimmung geschieht auf Grundlage eines quadratischen Interpolationspolynoms, dessen Kurve durch die Messwerte T1, T2, T3 führt, und eine zugehörigen Minimalwertbestimmung. Für drei Messwerte T1, T2, T3 kann die Minimalwertbestimmung als analytische Lösung geschrieben werden. Bei dem dargestellten Beispiel mit T3 > T2 > T1 entspricht die effektive Kerntemperatur Te dem ersten Messwert T1, so dass gilt Te = T1.

Insbesondere falls die erste Sensorposition x1 von der Spitze beabstandet ist, kann optional vorgesehen sein, dass mittels der Interpolation auch eine effektive Kerntemperatur Te einer zugeordneten Position xm bestimmt wird, welche in Richtung der Spitze liegt, d.h. außerhalb der für die Bestimmung der Kurve verwendeten Sensorpositionen x1, x2, x3.

Je nachdem, wie der Benutzer den Kerntemperaturfühler im Gargut positioniert, können verschiedene Stecksituationen auftreten. Weitere beispielhafte Stecksituationen sind anhand der folgenden Figuren dargestellt.

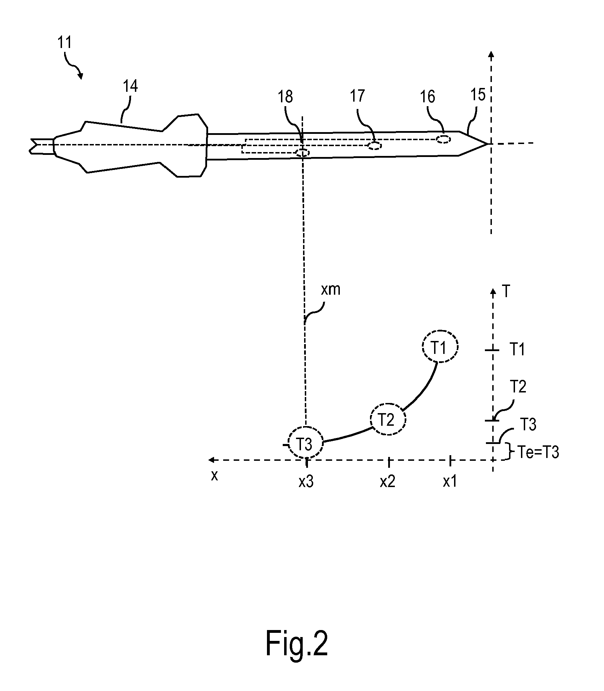

**Fig. 2** zeigt einen Fall, bei dem eine niedrigste Temperatur als Messwert T3 bei der dritten Sensorposition x3, eine höhere Temperatur als zweiter Messwert T2 an der mittleren Sensorposition x2 und eine höchste Temperatur als dritter Messwert T1 bei der ersten Sensorposition x1 nahe der Spitze erfasst wird. Somit gilt T1 > T2 > T3. Der dritte Temperatursensor 18 befindet sich somit am nächsten zum Kern des Garguts G. Daraus bestimmt die Steuereinrichtung 19 anhand eines Interpolationspolynoms (hier: einer Parabel) beispielhaft, dass die effektive Kerntemperatur Te gleich dem dritten Messwert T3 ist, also Te = T3 ist, und die Position xm des Kerns mit der dritten Sensorposition x3 zusammenfällt.

Optional kann auch vorgesehen sein, dass die Steuereinrichtung 19 einen Minimalwert für die Position xm jenseits der dritten Sensorposition x1 in Richtung des Griffs 14 als effektive Kerntemperatur Te bestimmt.

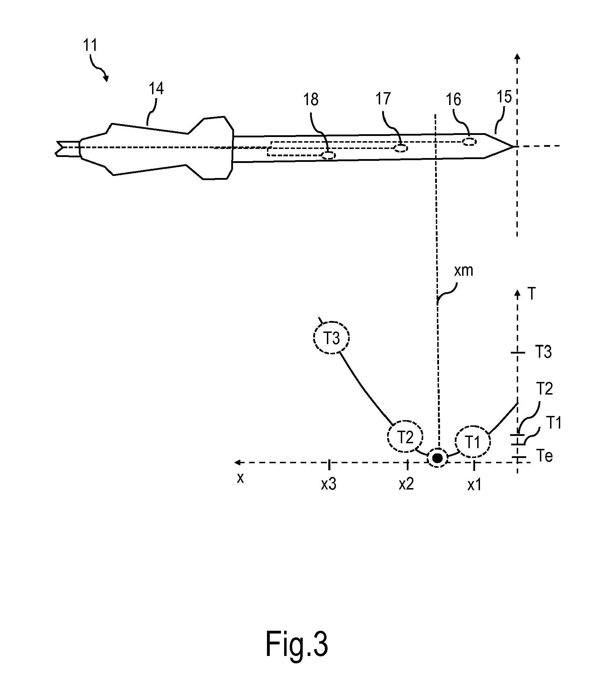

**Fig. 3** zeigt einen Fall, bei dem eine höchste Temperatur als dritter Messwert T3 bei der dritten Sensorposition x3 und eine deutlich niedrigere Temperatur als zweiter Messwert T2 bei der zweiten Sensorposition x2 erfasst wird. Demgegenüber ist die Temperatur beim ersten Messwert T1 an der ersten Sensorposition x1 nur geringfügig niedriger. Insbesondere gilt für diesen Fall noch T3 > T2 und T3 > T1.

Die Steuereinrichtung 19 nutzt auch hier ein geeignetes parabolisches Polynom (Polynom zweiter Ordnung), welches durch die drei Messwerte T3, T2 und T1 führt, als Grundlage zur Bestimmung der effektiven Kerntemperatur Te. Zur Minimalwertbestimmung des Temperatur-Minimalwerts ermittelt die Steuereinrichtung 19 insbesondere analytisch die Position xm, welche zwischen der ersten und der zweiten Sensorposition x1 bzw. x2 liegt. Die Temperatur dieser minimalen Position xm entspricht der derart interpolierten effektiven Kerntemperatur Te. Insbesondere ist erkennbar, dass die effektive Kerntemperatur Te sowohl niedriger als die erste gemessene Temperatur am ersten Messwert T1 als auch niedriger als die zweite gemessene Temperatur am zweiten Messwert T2 ist. Der Kern des Garguts G befindet sich somit an der Position xm zwischen den ersten beiden Sensorpositionen x1 und x2.

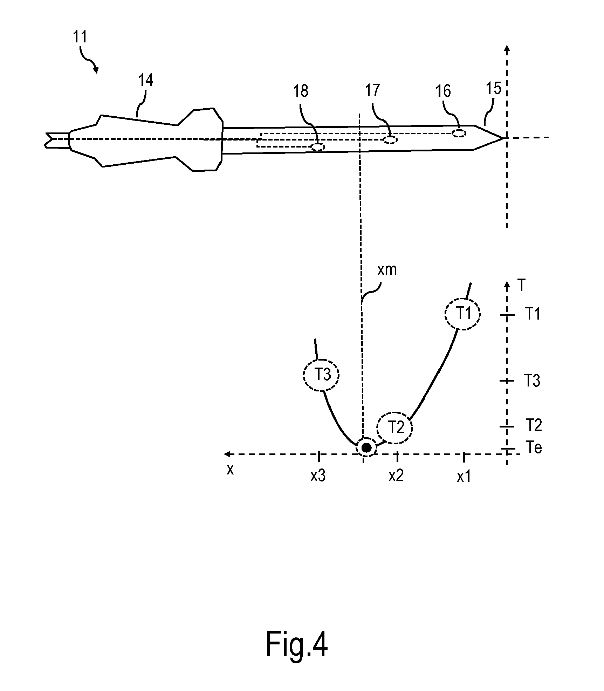

**Fig. 4** zeigt ein Beispiel, bei dem die höchste Temperatur beim ersten Messwert T1 an der ersten Sensorposition x1 erfasst wird, eine etwas niedrigere Temperatur beim dritten Messwert T3 an der dritten Sensorposition x3 erfasst wird und eine niedrigste gemessene Temperatur beim zweiten Messwert T2 an der zweiten Sensorposition x 2 erfasst wird. Es gilt T1 > T2 und T1 > T3. Die Position xm, welche am nächsten am Kern des Garguts G liegt, befindet sich hier zwischen der zweiten und dritten Sensorposition x2, x3. Die dort herrschende effektive Kerntemperatur Te ist niedriger als die Temperatur des zweiten Messwerts T2.

Der Ansatz besteht somit darin, die effektive Kerntemperatur durch räumliche Interpolation aus den drei gemessenen Temperaturwerten als den Messwerten T1, T2, T3 an den zugeordneten Sensorpositionen x1, x2 und x3 zu ermitteln.

Da ein Kerntemperaturfühler nur eine begrenzte Anzahl von Messpunkten aufweist, wird die niedrigste Temperatur im Kern des Garguts, welche die effektive Kerntemperatur ist, eher nur zufällig mit einem der Messpunkte T1, T2 oder T3 gemessen. Durch den Ansatz einer Interpolation und Minimalwertbildung zum Bestimmen einer minimalen Temperatur ist es bei bestimmten Stecksituationen, wie insbesondere im Fall von Fig.3 und Fig.4 auf einfache Weise möglich, die effektive Kerntemperatur Te bzw. deren Position xm zu interpolieren und das Minimum der interpolierten Funktion zu suchen.

Im Folgenden wird dies am Beispiel des 3-Punkt-Kemtemperaturfühlers 11 genauer beschrieben. Der Vorteil dreier Messpunkte T1, T2 oder T3 ist, dass es zur Bestimmung des Minimalwerts des Lösungspolynoms eine analytische Lösung gibt. Im Einzelnen ist ein quadratischer Ansatz wählbar gemäß

$$y = a * x2 + b * x + c \qquad (1).$$

Dies ist ein Interpolationspolynom zweiter Ordnung bzw. eine Parabel. Daraus wird das Minimum dieses Interpolations-Polynoms bestimmt. Mathematisch wird das Extremum einer Funktion als Nullstelle der ersten Ableitung bestimmt. Die Ableitung von (1) ist:

$$y'(x) = 2a * x + b \qquad (2).$$

Die Nullstelle von Gleichung (2), welche der Position xm des Minimums entspricht, ergibt sich aus

$$y'(xm) = 2a * xm + b = 0.$$

Das Minimum bzw. dessen gesuchte Position xm ist

$$xm = \frac{-b}{2*a}\ . \qquad\qquad (3).$$

Die effektive Kerntemperatur Te ist der Funktionswert von (1) an der Position xm:

$$Te = a * xm^2 + b * xm + c \quad (4).$$

Die Parameter a, b und c ergeben sich aus den drei Temperatur- bzw. Messwerten T1, T2, und T3 an den Sensorpositionen x1, x2 und x3 der drei Temperatursensoren 16, 17 bzw. 18 gemäß

$$T1 = T(x1) = a * x1^2 + b * x1 + c,$$
$$T2 = T(x2) = a * x2^2 + b * x2 + c \qquad (5)$$
$$T3 = T(x3) = a * x3^2 + b * x3 + c.$$

und
Aus dem Gleichungssystem (5) ergeben sich die Parameter a, b und c zu

$$a = \frac{x1*(T2-T3)+x2*(T3-T1)+x3*(T1-T2)}{(x1^2-x1*(x2+x3)+x2*x3)*(x3-x2)}, \qquad (6)$$

$$b = \frac{x1^2*(T2-T3)+x2^2*(T3-T1)+x3^2*(T1-T2)}{(x1^2-x1*(x2+x3)+x2*x3)*(x2-x3)} \qquad (7)$$

und

$$c = \frac{x2*x3*(x1*(T2-T3)+x2*(T3-T1)+x3*(T1-T2))}{(x1^2-x1*(x2+x3)+x2*x3)*(x3-x2)} + \frac{x3*(T3-T2)}{x2-x3} + T3 \quad (8)$$

Das Minimum, also die effektive Kerntemperatur Te, tritt an der Position xm auf und somit bei

$$xm = \frac{1}{2}*\frac{x1^2*(T2-T3)+x2^2*(T3-T1)+x3^2*(T1-T2)}{x1*(T2-T3)+x2*(T3-T1)+x3*(T1-T2)}\ . \qquad (9)$$

Die effektive Kerntemperatur Te ergibt sich analytisch durch Einsetzen von xm aus Gl.(9) in Gl.(4).
Praktische Messungen an Fleischstücken zeigen, dass die mit diesem Ansatz ermittelte effektive Kerntemperatur Te = T(xm) typischerweise nur ein bis zwei Grad Celsius unter dem Minimum der Messwerte T1, T2 und T3 liegt. Auf eine Gardauer hat diese kleine Temperaturdifferenz jedoch einen großen Einfluss. Dies liegt darin begründet, dass bei einem typischen Zeitverlauf der drei Messwerte T1, T2, T3 des 3-Punkt-Kerntemperaturfühlers 11 der Anstieg der Temperatur mit zunehmender Gardauer zunehmend flacher wird. Ergibt nun die Berechnung der effektiven Kerntemperatur Te mit dem obigen Verfahren, dass noch eine Temperaturerhöhung von 1 °C benötigt wird, bedeutet dies eine Verlängerung des Garvorgangs um z.B. 15 Minuten. Durch diese Verlängerung des Garvorgangs mit Hilfe dieser Bestimmung der effektiven Kerntemperatur Te wird also sichergestellt, dass die vom Benutzer vorgegebene Soll-Kerntemperatur sicherer erreicht wird als wenn nur eine einfache Auswertung des Minimums der Messwerte vorgenommen werden würde.

Im Rahmen einer Implementierung des Verfahrens sind die Werte bzw. Sensorpositionen x1, x2 und x3 durch die Geometrie der Messpunkte gegeben, und T1, T2 und T3 sind die dort gemessenen Temperaturen. Ein Elektronik-Modul, z.B. die zentrale Steuereinheit 19 des Gargeräts 12, berechnet mit den Gleichungen (7) bis (9) die Zwischenwerte a, b und c. Mit Gleichung (4) oder mit Gleichung (9) wird die Position xm berechnet. Mit Gleichung (1) bzw. (4) wird schließlich die effektive Kerntemperatur Te berechnet. Dies kann auch in einem einzigen Schritt ablaufen.

Das Verfahren wurde in den obigen Figuren am Beispiel des 3-Punkt-Kerntemperaturfühlers 11 vorgestellt. Realisierbar ist insbesondere auch eine Erweiterung auf beliebig viele, insbesondere n > 3 Messpunkte bzw. Temperatursensoren mit entsprechenden Sensorpositionen. Kurz skizziert beruht das Verfahren für n, insbesondere n > 3, Messpunkte auf folgenden Schritten:

1) Bildung einer Interpolations-Funktion T = T(x) für die n Temperatur- bzw. Messwerte Tn an den n Sensorpositionen xi. Es wird beispielsweise ein Interpolations-Polynom n-ten Grades angesetzt. Stützpunkte der Interpolations-Funktion sind also:

x1, T1; x2, T2; ... xn, Tn.

Anstelle eines Polynoms kann auch eine Funktion anderen Typs angesetzt werden.

2) Ermittlung der Position xm des Minimums der Interpolations-Funktion

3) Ermittlung des Funktionswertes als effektiver Kerntemperatur Te an der Stelle bzw. Position xm gemäß Te = T(xm), wobei Te die effektive Kerntemperatur ist.

Für n = 3 wurde dieses Verfahren oben dargestellt und in geschlossenen Formeln ausgedrückt. Für n > 3 lässt sich das Verfahren mit bekannten Algorithmen der numerischen Mathematik durchführen. Dies umfasst beispielsweise die Schritte:

1) Bildung des Interpolations-Polynoms. Bekannte Verfahren umfassen zum Beispiel die Lagrange'sche Interpolationsformel oder den Newton'schen Algorithmus.

2) Ermittlung des Minimums. Dies wird beispielsweise durchgeführt durch Anwendung des HORNER-Schemas oder des NEWTON-Verfahrens zur numerischen Ermittlung von Nullstellen.

3) Einsetzen der Lösung aus 2) in 1).

Diese Schritte können in dem Gargerät 12 implementiert sein, z.B. in der Steuereinrichtung 19. Dabei brauchen die Schritte nicht in der angegebenen Art oder Reihenfolge implementiert sein oder ausgeführt werden, sondern in dem Gargerät 12 mag beispielsweise ein Algorithmus implementiert sein, welcher das obige Verfahren oder sein Ergebnis wiedergibt. Dabei können insbesondere auch Ergebnisse der obigen Schritte verwendet werden, ohne die Schritte explizit ausführen zu müssen.

Selbstverständlich ist die vorliegende Erfindung nicht auf das gezeigte Ausführungsbeispiel beschränkt.

Die Implementierung dieses Verfahrens erfolgt insbesondere im Elektronik-Modul bzw. der Steuereinrichtung 19 eines Backofens als dem Gargerät 12. Die Steuereinrichtung 19 enthält insbesondere einen Prozessor, mit welchem Interpolation und Minimalwert-Bestimmung durchführbar sind. Jedoch kann die Verfahrensdurchführung auch ganz oder teilweise in eine Elektronik ausgelagert sein, welche sich beispielsweise im Griff 14 des Kerntemperaturfühlers 11 befindet.

Falls das Fühlerrohr 15 nicht weit genug ins Gargut G eingesteckt wurde, kann mittels des Interpolationsverfahrens auch eine räumliche Extrapolation in Richtung der Spitze bzw. vor dem Kerntemperaturfühler 11 durchgeführt werden.

Bezugszeichenliste

| | | |
|---|---|---|
| 11 | Kerntemperaturfühler |
| 12 | Gargerät |
| 13 | Garraum |
| 14 | Griff |
| 15 | Fühlerrohr |
| 16 | Temperatursensor |
| 17 | Temperatursensor |
| 18 | Temperatursensor |
| 19 | Steuereinrichtung im Gargerät |
| 20 | Anschlusskabel |
| G | Gargut |
| T | Temperatur |
| T1 | Messwert |
| T2 | Messwert |
| T3 | Messwert |
| Te | effektive Kerntemperatur |
| x | Abstand eines Messpunktes von der Spitze des Kerntemperaturfühlers |
| x1 | Sensorposition |
| x2 | Sensorposition |
| x3 | Sensorposition |
| xm | Position der minimalen bzw. effektiven Kerntemperatur |

**Patentansprüche**

1. Verfahren zum Bestimmen einer effektiven Kerntemperatur (Te) eines Garguts (G) anhand von Messwerten (T1, T2, T3) von mindestens drei Temperatursensoren (16, 17, 18) eines Kerntemperaturfühlers (11), **dadurch gekennzeichnet, dass** die effektive Kerntemperatur (Te) mittels einer Interpolation der Messwerte (T1, T2, T3) und Minimalwertbildung bestimmt wird.

2. Verfahren nach Anspruch 1, **dadurch gekennzeichnet, dass** die Messwerte (T1, T2, T3) innerhalb eines Messzyklus abgefühlt werden.

3. Verfahren nach einem der vorherigen Ansprüche, **dadurch gekennzeichnet, dass** die effektive Kerntemperatur (Te) mittels einer Polynom-Interpolation bestimmt wird.

4. Verfahren nach Anspruch 3, **dadurch gekennzeichnet, dass** die effektive Kerntemperatur (Te) als Lösung einer analytischen, insbesondere quadratischen Gleichung bestimmt wird, wobei die Messwerte (T1, T2, T3) Eingangswerte der analytischen Gleichung darstellen.

5. Verfahren nach Anspruch 3 oder 4, **dadurch gekennzeichnet, dass** die effektive Kerntemperatur (Te) anhand von Messwerten (T1, T2, T3) genau dreier der Temperatursensoren (16, 17, 18) bestimmt wird.

6. Verfahren nach einem der vorherigen Ansprüche, **dadurch gekennzeichnet, dass** die Interpolation auf Grundlage einer iterativen Bestimmung mittels eines Iterationsgleichungssystems durchgeführt wird, wobei die Messwerte (T1, T2, T3) als Startwerte für das Iterationsgleichungssystem verwendet werden.

7. Vorrichtung zum Bestimmen einer effektiven Kerntemperatur (Te) eines Garguts (G) anhand von Messwerten (T1, T2, T3) von mindestens drei Temperatursensoren (16, 17, 18) eines Kerntemperaturfühlers (11), wobei die Temperatursensoren (16, 17, 18) in einer Einsteckrichtung beabstandet angeordneten sind, **dadurch gekennzeichnet, dass** die Vorrichtung dazu eingerichtet ist, die Kerntemperatur (Te) anhand des Verfahrens nach einem der vorherigen Ansprüche zu bestimmen.

8. Vorrichtung nach Anspruch 7, **dadurch gekennzeichnet, dass** die Vorrichtung ein mit dem Kerntemperaturfühler (11) kommunikativ koppelbares Gargerät (12) ist.

9. Vorrichtung nach Anspruch 7 oder 8, **dadurch gekennzeichnet, dass** die Vorrichtung der Kerntemperaturfühler (11) ist.

Fig.1

Fig.2

Fig.3

Fig.4

**Europäisches Patentamt**

**European Patent Office**

**Office européen des brevets**

## EUROPÄISCHER RECHERCHENBERICHT

Nummer der Anmeldung

EP 13 19 4477

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 047756 A1 (BSH BOSCH SIEMENS HAUSGERAETE [DE]) 6. April 2006 (2006-04-06) * Absätze [0006], [0028], [0033] - [0036]; Abbildungen 1,2 * ----- | 1-9 | INV. G01K7/42 |
| | | | RECHERCHIERTE SACHGEBIETE (IPC) G01K |

Der vorliegende Recherchenbericht wurde für alle Patentansprüche erstellt

| Recherchenort | Abschlußdatum der Recherche | Prüfer |
|---|---|---|
| Den Haag | 22. April 2014 | Phleps, Stefanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 13 19 4477

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2014

| Im Recherchenbericht angeführtes Patentdokument | Datum der Veröffentlichung | Mitglied(er) der Patentfamilie | Datum der Veröffentlichung |
|---|---|---|---|
| DE 102004047756 A1 | 06-04-2006 | DE 102004047756 A1<br>WO 2006035005 A1 | 06-04-2006<br>06-04-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10061821 A1
- DE 29923215 U1